# EUROPÄISCHE PATENTSCHRIFT

(11) **EP 4 321 330 B1**
(45) Veröffentlichungstag und Bekanntmachung des Hinweises auf die Patenterteilung: **19.03.2025**
(21) Anmeldenummer: 23188451.1
(22) Anmeldetag: 28.07.2023
(51) Int. Cl.: B29C 70/54, B29C 53/56, B29C 70/86

(54) **VERFAHREN ZUR HERSTELLUNG KERNLOSER FASERVERBUNDBAUTEILE UND WICKELSTIFT FÜR EIN FASERVERBUNDBAUTEIL**
METHOD FOR PRODUCING CORELESS FIBRE COMPOSITE COMPONENTS AND WINDING PIN FOR A FIBRE COMPOSITE COMPONENT
PROCÉDÉ DE FABRICATION DE COMPOSANTS COMPOSITES RENFORCÉS PAR DES FIBRES SANS NOYAU ET BROCHE D'ENROULEMENT POUR UN COMPOSANT COMPOSITE RENFORCÉ PAR DES FIBRES

(30) Priorität: 09.08.2022 DE 102022120073
(43) Veröffentlichungstag der Anmeldung: 14.02.2024
(73) Patentinhaber: Universität Stuttgart, 70174 Stuttgart (DE); Hochschule Aalen, 73430 Aalen (DE); PVA TePla Analytical Systems GmbH, 73463 Westhausen (DE)
(72) Erfinder: Mindermann, Pascal, 73240 Wendlingen a.N. (DE); Müllner, Ralf, 73760 Ostfildern (DE); Hoffrogge, Peter, 73463 Westhausen (DE); Dieringer, Erik, 72414 Rangendingen (DE); Klink, René, 73553 Alfdorf (DE); Ocker, Christof, 73529 Schwäbisch Gmünd (DE); Merkel, Markus, 73460 Hüttlingen (DE); Bauernhansl, Thomas, 75173 Pforzheim (DE); Gresser, Götz Theodor, 70192 Stuttgart (DE)
(74) Vertreter: DREISS Patentanwälte PartG mbB

(56) Entgegenhaltungen:
- WO-A1-2018/229437
- PETER VON PANDA: "Blink XT Camera Metal Wall Mounts Review", 9 October 2018 (2018-10-09), XP093112603, Retrieved from the Internet <URL:https://www.youtube.com/watch?v=6sigAt_xT-M> [retrieved on 20231215]
- PETER VON PANDA: "Blink XT Camera Metal Wall Mounts Review", 9 October 2018 (2018-10-09), XP093112603, Retrieved from the Internet <URL:https://www.youtube.com/watch?v=6sigAt_xT-M> [retrieved on 20231215]

## Beschreibung

Die Erfindung betrifft ein Verfahren zur Herstellung hochpräziser Faserverbundbauteile, die beispielsweise durch ein Nasswickelverfahren hergestellt werden. Um diese Faserverbundbauteile mit anderen Bauteilen zu verbinden oder andere Bauteile oder Baugruppen an dem Faserverbundbauteil befestigen zu können, sind an verschiedenen Stellen Befestigungspunkte mit Innengewinden und Kontaktflächen vorgesehen. Dort wird das Faserverbundbauteil mit einer benachbarten Struktur oder einem anderen Bauteil beziehungsweise einer anderen Baugruppe verbunden.

Unter die synonym verwandten Begriffe "Faserverbundbauteil" oder "Faserbauteil" fallen Bauteile aus einem Faserverbundwerkstoff, die mindestens zwei Befestigungspunkte aufweisen. Im Bereich der Befestigungspunkte sind jeweils mindestens eine Kontaktfläche und ein Gewinde oder eine Bohrung ausgebildet. An und mit Hilfe dieser Befestigungspunkte wird das Faserverbundbauteil mit einer anderen Struktur und/oder einem weiteren Faserverbundbauteil verschraubt, vernietet oder auf andere Weise lösbar verbunden. Mindestens ein Teil der beim Nasswickeln eingesetzten Wickelstifte sind als Befestigungspunkte ausgebildet. Sie weisen eine Kontaktfläche und ein optionales (Innen-) Gewinde bzw. eine Bohrung auf.

Viele Faserverbundbauteile werden durch Nasswickeln hergestellt, das zum Beispiel in der EP 1 268 164 B1 und der oder der DE 10 2014 019 080 A1 beschrieben wird. Beim Nasswickelverfahren werden Wickelstifte in einer Wickelvorrichtung in der gewünschten Position angeordnet und ausgerichtet. Die Wickelstifte bilden die späteren Knotenpunkte eines durch Nasswickeln hergestellten Fachwerks oder Tragwerks. Anschließend wird eine harzgetränkte Faser so um die Wickelstifte gewickelt, dass das gewünschte Bauteil entsteht. Die Faser kann auch in einem zweiten Schritt mit einem (noch) flüssigen Harz getränkt werden. Zumeist ist das durch Nasswickeln hergestellte Bauteil ein Stabtragwerk mit überwiegend auf Druck oder Zug belasteten Stäben.

WO 2018/229437 A1 offenbart ein Verfahren zur Herstellung eines Teils aus Verbundwerkstoff, wobei (später mit Harz getränkte) Fasern F einerseits um Laschen eines Chassis sowie um innere Windungen gewickelt werden, wobei die Achsen der Laschen und der Windungen unterschiedliche Orientierungen aufweisen, um dem Fasergitter eine dreidimensionale Form zu geben.

Eine Faser im Sinne der Erfindung ist ein Bündel, Strang oder Multifilamentgarn aus mehr oder weniger parallel angeordneten Endlosfasern. Die Faser kann z. B. aus Carbon, Glas, Aramid, Basalt, Flachs und/oder Hanf bestehen.

Der Begriff "Wickeln" umfasst im Zusammenhang mit der Erfindung das Wickeln von Fasern um zwei oder mehr Wickelstifte. Dabei umschließen die Fasern eigens dafür ausgebildete Bereiche der Wickelstifte mindestens teilweise, so dass nach dem Aushärten des Harzes ein Formschluss und ein Stoffschluss zwischen den Fasern und den Wickelstiften vorhanden ist. Die eigens dafür an den Wickelstiften ausgebildeten Bereiche werden nachfolgend als "Wickelzapfen" bezeichnet. Über die Wickelzapfen können Kräfte und Momente von den Fasern auf den Wickelstift und umgekehrt übertragen werden.

Die Formgebung eines erfindungsgemäßen Faserverbundbauteils kann auch durch andere textile Techniken, wie Flechten, Knäulen, etc. realisiert werden.

Faserverbundbauteile sind nicht nur sehr leicht, sondern auch sehr steif. Allerdings treten bei der Herstellung von Faserbauteilen meistens Abweichungen der Lage und/oder der Ausrichtung der Kontaktflächen von den Sollwerten auf. Insofern unterscheiden sich Faserverbundbauteile nicht von anderen Bauteilen, wie zum Beispiel Gussteilen oder geschweißten Stabtragwerken. Jedoch können aufgrund der Isotropie und Homogenität bei metallischen Bauteilen Toleranzen unmittelbar durch spanende Fertigungsmethoden angepasst werden.

Wenn nun ein solches Faserbauteil mit einer benachbarten Struktur beispielsweise verschraubt oder vernietet wird, dann wird das Faserbauteil aufgrund der Abweichungen von Lage und/oder Ausrichtung seiner Kontaktflächen beim Anziehen der Schrauben bzw. dem Anbringen der Niete verformt. Diese Verformungen führen aufgrund der hohen Steifigkeit zu inneren Spannungen im Faserverbundbauteil. Diese inneren Spannungen sind unerwünscht, unter anderem, weil sie die Belastbarkeit des Faserverbundbauteils reduzieren.

Um die negativen Auswirkungen der inneren Spannungen zu kompensieren, gibt es verschiedene Ansätze. Zum Beispiel können die Wandstärken bzw. die Durchmesser der Stäbe des Faserverbundbauteils vergrößert werden. Allerdings steigen dadurch das Gewicht und die Herstellungskosten des Faserverbundbauteils.

Bisweilen hat man sich mit Verbindungswinkeln beholfen, die zwischen dem Faserverbundbauteil und einer benachbarten Struktur angeordnet sind. In den Verbindungswinkeln sind Langlöcher vorgesehen, durch die Befestigungsschrauben gesteckt werden. Mit Hilfe der Langlöcher werden die Lageabweichungen der Kontaktflächen ausgeglichen. Die Kraftübertragung zwischen dem Faserverbundbauteil und der benachbarten Struktur mittels Verbindungswinkeln erfolgt durch einen Reibschluss zwischen den Verbindungswinkeln.

Eine Korrektur von Ausrichtungsfehlern ist mit diesen Verbindungswinkeln nicht oder, wenn überhaupt, nur in begrenztem Umfang möglich. Unter dem Begriff "Ausrichtungsfehler" wird im Zusammenhang mit der Erfindung folgendes verstanden:
Die Ausrichtungen der Kontaktflächen des Faserverbundbauteils können durch deren Normalenvektoren beschrieben werden. In gleicher Weise kann die Ausrichtung der Gegenfläche einer benachbarten Struktur durch deren Normalenvektor beschrieben werden. Im Idealfall verlaufen die Normalenvektoren von einer Kontaktfläche und der zugehörigen Gegenfläche parallel zueinander; dann ist kein Ausrichtungsfehler vorhanden. Wenn die Normalenvektoren einer Kontaktfläche und deren Gegenfläche nicht parallel zueinander verlaufen, dann ist der Ausrichtungsfehler gleich dem Winkel, den die beiden Normalenvektoren einschließen.

Der Einsatz von Verbindungswinkel zum Ausgleich der Abweichungen von Lage und/oder Ausrichtung der Kontaktflächen hat verschiedene Nachteile:
Die Zahl der Bauteile und der Bauraumbedarf nehmen **zu.** Außerdem ist die Kraftübertragung durch einen Reibschluss weniger leistungsfähig als die direkte Kraftübertragung durch den Schaft einer Schraube.

Die Verbindungswinkel sind aufgrund der Spannungskonzentration massiv auszuführen, was das Gesamtgewicht der Baugruppe deutlich erhöhen kann.

Der Erfindung liegt die Aufgabe zugrunde, ein Verfahren zum Herstellen von Faserverbundbauteilen und einen Wickelstift bereitzustellen, welche die Nachteile des Standes der Technik vermeiden.

Diese Aufgabe wird erfindungsgemäß gelöst durch ein Verfahren zur Herstellung von Faserverbundbauteilen, welches die folgenden Verfahrensschritte umfasst:
- Positionieren von mehreren Wickelstiften in einer vorgegebenen Position und Ausrichtung, wobei mindestens einer der Wickelstifte eine Kontaktfläche aufweist;
- Ablegen von einer oder mehreren Fasern um die Wickelstifte, so dass die Fasern zwei oder mehr Wickelstifte miteinander verbinden, wobei die Faser(n) vor oder nach der Formgebung mit Harz getränkt werden;
- Aushärten des Harzes.
- Nach dem Aushärten des Harzes folgt der Schritt "Überarbeiten der mindestens einen Kontaktfläche" zum Ausgleich von Abweichungen der Lage und/oder der Ausrichtung der Kontaktfläche(n).

Der Begriff "Ablegen von einer oder mehreren Fasern" umfasst verschiedene Techniken, wie das "Wickeln", das "Flechten" und das "Knäulen". Im Weiteren wird das erfindungsgemäße Verfahren anhand des Wickelns exemplarisch erläutert, ohne die Erfindung darauf zu beschränken.

Durch Auf- oder Abtragen bzw. Überarbeiten der Kontaktfläche von mindestens einem Wickelstift werden erfindungsgemäß die an einem Faserbauteil vorhandenen Abweichungen von Lage und/oder Ausrichtung einer oder mehrerer Kontaktflächen ausgeglichen. In der Praxis wird häufig mehr als eine Kontaktfläche überarbeitet. Oftmals werden alle Kontaktflächen eines Faserbauteils überarbeitet.

Es ist auch möglich, eine Kontaktfläche des Faserbauteils als Referenzfläche zu nutzen und nicht zu überarbeiten und nur die anderen Kontaktflächen zu überarbeiten. Dadurch können die Positions- und Ausrichtungsfehler aller Kontaktflächen egalisiert werden.

Ein auf diese Weise überarbeitetes Faserbauteil kann direkt mit einer benachbarten Struktur verschraubt oder vernietet werden, ohne dass Verspannungen auftreten. Alternativ können die Kontaktflächen auch so überarbeitet werden, dass eine gewollte Vorspannung in dem Bauteil gezielt eingestellt wird. Dadurch kann in manchen Bereichen des Bauteils eine Druckspannung und in anderen Bereichen des Bauteils eine Zugspannung erzeugt werden.

Anhand eines vereinfachten Beispiels soll das erfindungsgemäße "Überarbeiten der mindestens einen Kontaktfläche" verdeutlicht werden. Die Vereinfachung besteht in der Annahme, dass die Kontaktflächen des Faserbauteils parallel zueinander verlaufen; d. h. es gibt keine Ausrichtungsfehler.

Ein Faserbauteil weist vier Wickelstifte mit vier Kontaktflächen auf, die in einer Ebene angeordnet sein sollen. Wenn alle Kontaktflächen in einer Ebene angeordnet sind, dann gibt es keine Abweichungen der Lage der Kontaktflächen von den Sollwerten. Das Faserbauteil kann in diesem Idealfall mit einer ebenen Struktur verschraubt werden, ohne dass es dabei verspannt wird.

Wenn nun eine der Kontaktflächen um einen Millimeter über die Ebene hinausragt, in der sich die drei anderen Kontaktflächen befinden, dann würde sich das nicht überarbeitete Faserbauteil beim Verschrauben mit einer ebenen Struktur verspannen. Um das zu vermeiden, wird erfindungsgemäß mindestens die über die Ebene der anderen Kontaktflächen hinausragende Kontaktfläche um einen Millimeter abgetragen, so dass anschließend alle vier Kontaktflächen in einer Ebene liegen. In Folge dessen kann das auf diese Weise überarbeitete Faserverbundbauteil mit einer ebenen Struktur verschraubt werden, ohne dass Verspannungen in dem Faserverbundbauteil auftreten.

In der Praxis ist es oft einfacher drei der vier oder sogar alle Kontaktflächen des Faserbauteils zu überarbeiten.

Bei einem Faserbauteil mit "n" Kontaktflächen würden demnach "n-1" oder sogar "n" Kontaktflächen überarbeitet.

Dann ist in jedem Fall gewährleistet, dass auch eventuell vorhandene Ausrichtungsfehler kompensiert werden.

Das Abtragen kann dadurch erfolgen, dass an der oder den überstehenden Kontaktflächen - zum Beispiel durch Fräsen, Schleifen oder Feilen etc. - so viel Material abgetragen wird, bis die auf diese Weise überarbeitete Kontaktfläche die gewünschte Position und Ausrichtung hat. Dabei kann die Kontaktfläche an einer als separates Bauteil ausgebildeten Ausgleichshülse ausgebildet sein, die lösbar mit dem Wickelstift verbunden ist. Sie kann auch integraler Bestandteil des erfindungsgemäßen Wickelstifts sein.

Eine separate Ausgleichhülse ist bevorzugt aus einem leicht zerspanbaren Material, das während der Nutzungsdauer des Faserverbundbauteils nicht fließt, sondern formstabil ist. Polyoxymethylene (POM) oder Polyetheretherketon (PEEK) sind besonders gut geeignet.

Wenn die Kontaktfläche an einer Ausgleichshülse ausgebildet ist, die nicht integraler Bestandteil des Wickelstifts ist, sondern auf diesem aufgesetzt bzw. an diesem angeordnet ist, kann das Überarbeiten der Kontaktfläche auch dadurch bewerkstelligt werden, dass die vorhandene Ausgleichshülse durch eine höhere oder flachere Ausgleichshülse eingesetzt wird, so dass sich nach dem Auswechseln der Ausgleichshülse die Kontaktfläche in der gewünschten Position befindet. Es ist auch möglich, die gewünschte Hülsenhöhe dadurch zu erreichen, dass mehrere Ausgleichshülsen übereinandergestapelt werden. Durch den Einsatz von nicht parallelen Ausgleichshülsen lassen sich mit dieser Methode auch Ausrichtungsfehler kompensieren.

In einer weiteren vorteilhaften Ausgestaltung werden die Wickelstifte vor dem Wickeln in einer Wickelvorrichtung positioniert und, falls erforderlich, ausgerichtet. Das Ausrichten der Wickelstifte ist vor allem dann von Bedeutung, wenn die Wickelstifte mehrere Wickelzapfen aufweisen, die in verschiedene Raumrichtungen zeigen. Die Ausrichtung der Wickelzapfen der Wickelstifte hängt von der Ausrichtung der beim Wickeln entstehenden Zug- oder Druckstäbe des Faserverbundbauteils ab.

Beim Nasswickeln werden die Fasern vor und/oder nach dem Wickeln mit einem flüssigen Harz/einer flüssigen Matrix getränkt. Sobald dieses Harz ausgehärtet ist, können alle oder Teile der Kontaktflächen des Faserverbundbauteils erfindungsgemäß überarbeitet werden, um die Abweichungen der Kontaktflächen des Faserverbundbauteils von den Sollpositionen und eventuell vorhandene Ausrichtungsfehler zu egalisieren.

Es ist auch möglich, an einer oder mehreren Kontaktflächen eines Faserbauteils gezielt Material aufzutragen, z. B. durch ein generatives Verfahren. Auch dadurch können Positions- und/oder Ausrichtungsfehler kompensiert werden.

Durch das erfindungsgemäße Verfahren ist es möglich, extrem leichte Faserverbundbauteile herzustellen. Durch das erfindungsgemäße Überarbeiten der Kontaktflächen nach der Herstellung des Faserverbundbauteils haben alle Kontaktflächen die vorgesehene Position und Ausrichtung. Beim Verschrauben des erfindungsgemäßen Faserverbundbauteils mit einer benachbarten Struktur treten keine unerwünschten Verspannungen auf.

Das erfindungsgemäße Herstellungsverfahren setzt voraus, dass die Wickelstifte eine Kontaktfläche aufweisen, wobei diese Kontaktfläche so zu bemessen ist, dass zum Ausgleich von fertigungsbedingten Positionsabweichungen und/oder Ausrichtungsfehlern ein Teil der Kontaktfläche abgetragen werden kann.

Alternativ ist es auch möglich, das Überarbeiten durch den Einsatz von Ausgleichshülsen mit geeigneten Höhen und damit einer ausreichenden Materialzugabe zu bewerkstelligen.

Auch dadurch wird erreicht, dass die Kontaktflächen des fertigen Faserverbundbauteils die vorgesehenen Positionen einnehmen. Auf diese Weise können die Abweichungen der Position der Kontaktflächen nach dem Überarbeiten der Kontaktflächen von der vorgesehenen Position auf die gewünschte Genauigkeit, typischerweise weniger als 0,1 mm, häufig sogar auf weniger als 0,005 mm reduziert werden.

Ausrichtungsfehler können durch den Einsatz von Ausgleichshülsen kompensiert werden, deren Ober- und Unterseiten nicht parallel zueinander verlaufen.

Wenn die mindestens eine Kontaktfläche durch Fräsen oder eine andere spanende Bearbeitung überarbeitet wird, dann hängen die Position und die Ausrichtung der Kontaktflächen zum einen von der Ausführung und Steifigkeit der Faserstruktur und zum anderen von der Genauigkeit des Bearbeitungszentrums bzw. der Werkzeugmaschine ab mit der die Kontaktflächen überarbeitet werden. Genauigkeiten von weniger als 0,005 mm sind dann ohne weiteres erreichbar.

Der erfindungsgemäße Wickelstift umfasst eine Grundplatte sowie mehrere Wickelzapfen und eine an der Grundplatte angeordnete Ausgleichshülse, wobei an der Grundplatte eine Bohrung oder ein Innengewinde ausgebildet ist, und wobei die Ausgleichshülse eine Kontaktfläche aufweist.

Die Ausgleichshülse kann man sich vereinfacht als kurzes Rohrstück vorstellen, das auf die Grundplatte des Wickelstifts aufgesetzt wird. In diesem Fall können der Wickelstift und die Ausgleichshülse aus verschiedenen Materialien sein.

Beispielsweise kann der Wickelstift aus Metall hergestellt werden. Er kann zum Beispiel durch generative Herstellungsverfahren (z. B. 3D-Druck) oder auch durch Gießen, Schmieden oder spanende Bearbeitung hergestellt werden.

Die Ausgleichshülse kann dann aus einem Kunststoff, beispielsweise durch Spritzgießen, hergestellt werden.

Alternativ ist es auch möglich, dass die Ausgleichshülse und der Wickelstift als integrale Baugruppe ausgebildet sind. Dann bestehen Wickelstift und Ausgleichshülse in der Regel aus dem gleichen Werkstoff. Auch hier ist es möglich, Metall oder Kunststoff einzusetzen, je nachdem welchen Belastungen der Wickelstift bzw. das Faserverbundbauteil standhalten muss.

Bei generativen Fertigungsverfahren, aber auch beim sogenannten Zwei-Komponenten Spritzgießverfahre kann die Ausgleichshülse aus einem anderen Material gefertigt werden als der Rest des Wickelstifts.

Die Wickelzapfen der Wickelstifte werden anwendungsspezifisch ausgerichtet. Wenn beispielsweise das Faserbauteil ein Stabtragwerk mit mehreren Stäben ist, dann ist eine Längsachse des Wickelzapfens häufig orthogonal zu einer Längsachse eines Stabs, der durch Wickeln hergestellt werden soll, ausgerichtet. Dann können die Fasern so um den zugehörigen Wickelzapfen gewickelt werden, dass eine sehr gute Krafteinleitung von dem Stab in den Wickelzapfen bzw. vom Wickelzapfen in den Stab entsteht.

Damit die Faser(n) nicht von dem Wickelzapfen abrutschen kann bzw. können, ist an den Enden des oder der Wickelzapfen ein Teller ausgebildet. Dieser Teller verhindert ein Herunterrutschen der noch nicht ausgehärteten Faser(n) von dem Wickelzapfen.

In weiterer vorteilhafter Ausgestaltung der Erfindung ist vorgesehen, dass an einem oder mehreren Wickelzapfen bzw. deren Tellern eine Positionierspitze ausgebildet ist.

Diese Positionierspitzen haben mehrere Funktionen. Zum einen ermöglichen sie das Erfassen der Position der Wickelstifte, vor dem Wickeln. Wenn die Ist-Position von der Soll-Position abweicht, dann kann die Ist-Position korrigiert werden, bevor die Fasern um die Wickelzapfen gelegt werden.

Zum anderen kann mit Hilfe der Positionierspitzen am fertigen Faserbauteil für jede Kontaktfläche das notwendige Maß der Überarbeitung ermittelt werden.

Im Fall einer automatischen Fertigung können die Wickelpins mit einem Greifer an den Positionierspitzen gefasst werden und in der gewünschten Position und Ausrichtung auf einer Wickelvorrichtung positioniert werden. Anschließend wird dann die Faser um die Wickelzapfen gelegt.

Wenn die Ausgleichshülse als separates Bauteil ausgebildet ist, dann sind in bevorzugter Ausgestaltung der Erfindung an der Grundplatte Mittel zur Aufnahme der Ausgleichshülse ausgebildet. Diese Mittel zur Aufnahme der Ausgleichshülse können beispielsweise als Absatz an der Grundplatte gebildet sein. Dann ist es ohne weiteres möglich, eine ring- oder rohrförmige Ausgleichshülse auf diesen Absatz aufzuschieben, und auf diese Weise die Kontaktfläche, die eine Stirnseite der Ausgleichshülse ist, bereitzustellen.

Die Grundplatte kann als Zweiflach oder regelmäßiges oder unregelmäßiges Polygon ausgebildet sein. Das erleichtert die Ausrichtung des Wickelstifts in einer Wickelvorrichtung. Beispielsweise kann die Ausrichtung der Grundplatte und mit ihr des Wickelstifts anhand einer Markierung in der Wickelvorrichtung vorgenommen bzw. überprüft werden. Dadurch ist auf einfache und zuverlässige Weise sichergestellt, dass die Wickelzapfen des Wickelstifts in allen drei Raumrichtungen wie gewünscht ausgerichtet sind.

Weitere Vorteile und vorteilhafte Ausgestaltungen der Erfindung sind der nachfolgenden Zeichnung, deren Beschreibung und den Patentansprüchen entnehmbar.

### Zeichnung

Es zeigen:
- Figur 1: ein Faserverbundbauteil mit drei Kontaktflächen vor der Überarbeitung;
- Figur 2: das Faserverbundbauteil gemäß Figur 1 nach der Überarbeitung;
- Figur 3: das mit einer Struktur 9 verbundene Faserverbundbauteil 1;
- Figuren 4: bis 6 Ausführungsbeispiele erfindungsgemäßer Wickelstifte und
- Figur 7: eine Wickelvorrichtung.

### Beschreibung der Ausführungsbeispiele

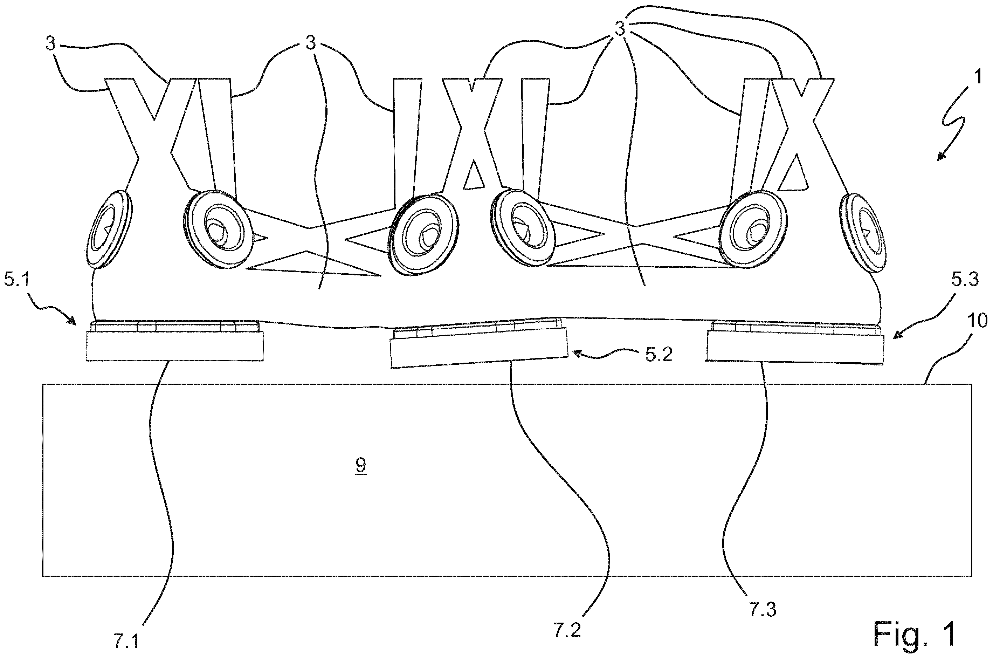

Die Figuren 1 bis 3 dienen zur Erläuterung des erfindungsgemäßen Verfahrens und von dessen Vorteilen. Diese Figuren zeigen in Teilansichten ein erfindungsgemäßes Faserverbundbauteil 1 in verschiedenen Stadien 1 und eine Struktur 9 mit der das Faserbauteil 1 verbunden werden soll. Eine Oberseite 10 der Struktur 9 ist eben. Auf dieser ebenen oder planen Oberseite 10 soll das Faserbauteil 1 mit der Struktur 9 verbunden werden.

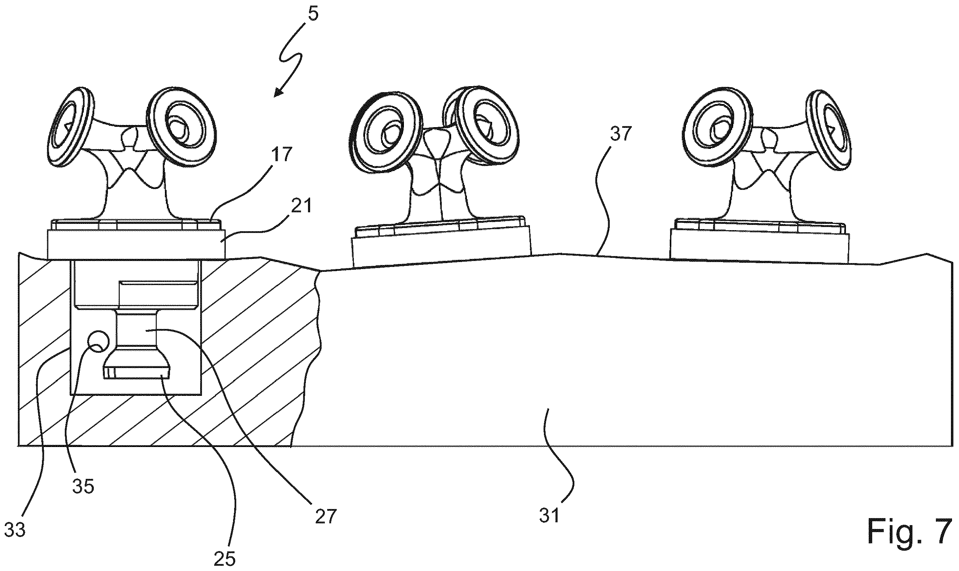

In der Figur 1 ist ein Teil eines Faserverbundbauteils 1 dargestellt. Es umfasst mehrere Stäbe 3. Das Faserverbundbauteil 1 kann beispielsweise durch Nasswickeln hergestellt worden sein. Dabei wird eine harzgetränkte Faser um die Wickelstifte 5.1 bis 5.3 gewickelt, die in einer Wickelvorrichtung 31 (siehe Figur 7) aufgenommen und gehalten sind. Nach dem Aushärten wird das Faserbauteil 1 aus der Wickelvorrichtung genommen.

Das Faserverbundbauteil 1 kann auch durch ein alternatives Verfahren wie Knäulen oder Flechten hergestellt worden sein.

Die Wickelstifte 5 sind nur sehr schematisch dargestellt; sie werden größtenteils von den Fasern 3 überdeckt. Jeder Wickelstift 5.1 bis 5.3 weist eine Kontaktfläche 7.1 bis 7.3 auf.

In der Figur 1 ist das Faserverbundbauteil 1 so dargestellt, wie es aus einer nicht dargestellten Wickelvorrichtung 31 kommt; d. h. de Kontaktflächen 7.1 bis 7.3 wurden (noch) nicht überarbeitet.

Bei der Herstellung des Faserverbundbauteils 1 zum Beispiel durch Nasswickeln können an jeder Kontaktfläche 7.1 bis 7.3 Lage- und/oder Ausrichtungsfehler auftreten, die sich im ungünstigsten Fall überlagern. Diese Lage- und/oder Ausrichtungsfehler können nicht oder nur mit sehr hohem Aufwand innerhalb enger Toleranzgrenzen gehalten werden.

Wenn man das Faserbauteil 1 in diesem Zustand (d. h. mit den Lage- und Ausrichtungsfehlern an den Kontaktflächen 7.1 bis 7.3) an der Oberseite 10 der starren Struktur 9 festschrauben würde, dann verspannt sich das Faserbauteil 1 wegen der Lage- und Ausrichtungsfehler, was unerwünscht ist.

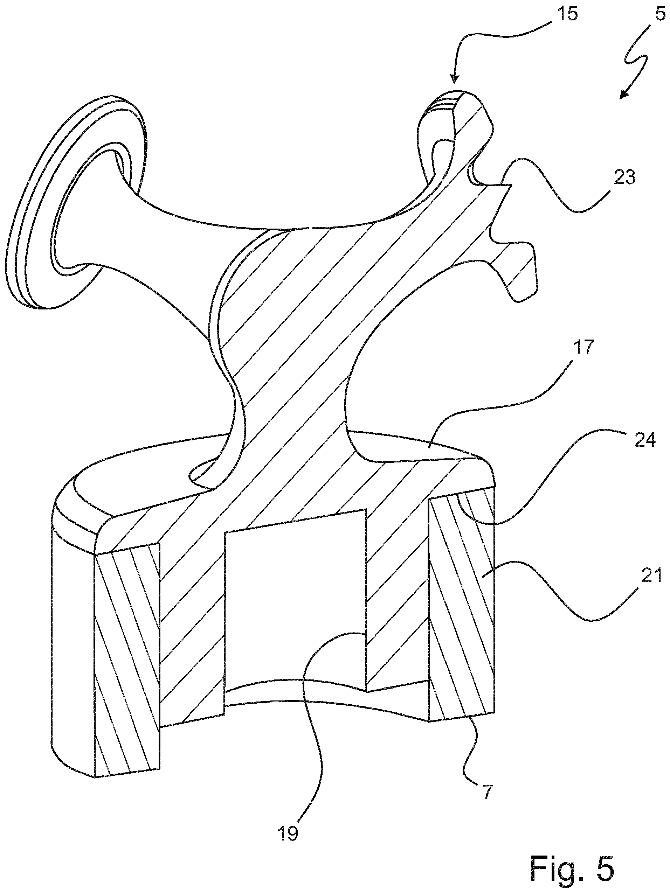

Die Verschraubung erfolgt über Innengewinde in den Wickelstiften 5.1 bis 5.3. Die Innengewinde sind in den Figuren 1 bis 3 nicht dargestellt. In der Figur 5 ist ein solches Innengewinde 19 dargestellt.

Anstelle von Innengewinden können auch Bohrungen in den Wickelstiften 5.1 bis 5.3 vorgesehen sein, um das Faserverbundbauteil 1 mit der Struktur 9 verbinden zu können. Das Verbinden kann in diesem Fall durch Niete erfolgen, die in die Bohrungen der Wickelstifte 5 eingesetzt werden.

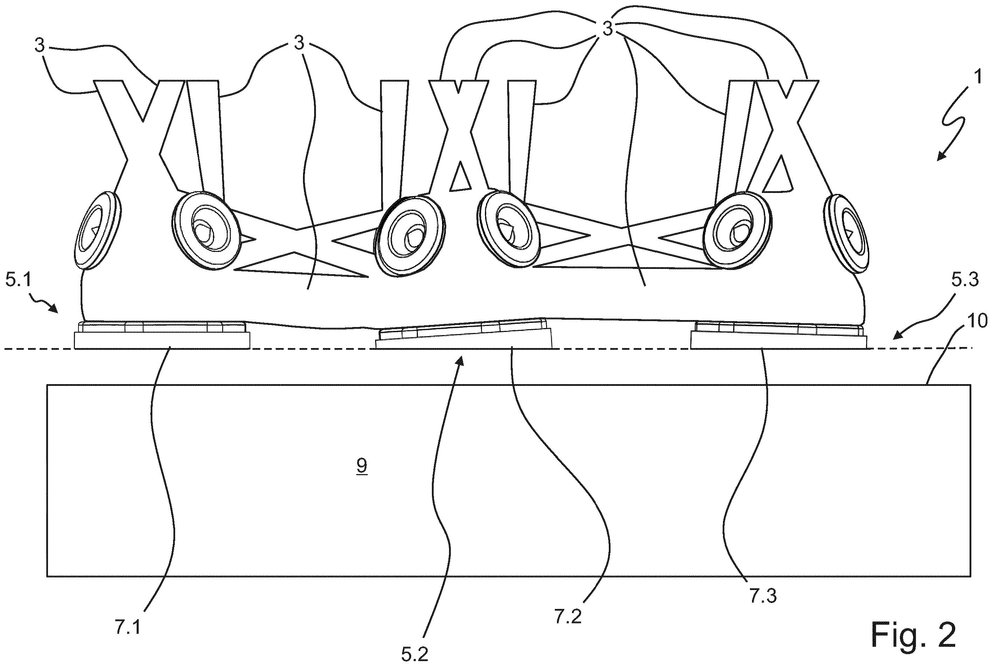

Erfindungsgemäß ist vorgesehen, die Lage- und/oder Ausrichtungsfehler der Kontaktflächen dadurch zu egalisieren, dass die Kontaktflächen 7.1 bis 7.3 des Faserbauteils 1 überarbeitet werden. Das kann zum Beispiel durch Überfräsen der Kontaktflächen 7.1 bis 7.3 des Faserbauteils 1 geschehen. Dabei wird an jeder Kontaktfläche 7.1 bis 7.3 so viel Material abgetragen, dass alle Kontaktflächen 7.1 bis 7.3 in einer Ebene liegen. Diese gemeinsame Ebene ist durch eine unterbrochene Linie in der Figur 2 angedeutet. Diese Ebene verläuft in der Figur 2 parallel zu der Oberseite 10 der Struktur 9.

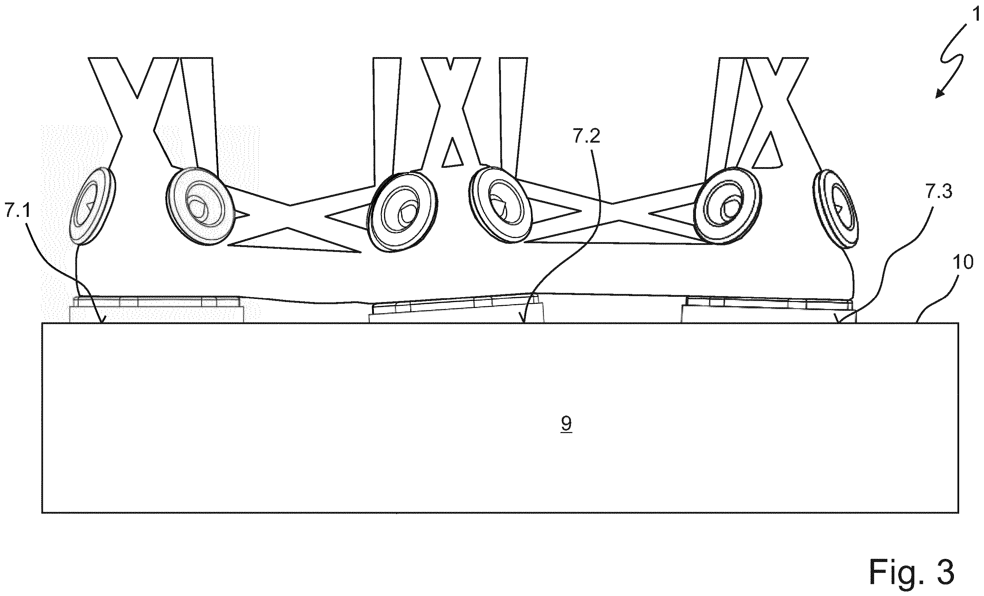

Wenn man nun das Faserverbundbauteil 1 mit den überarbeiteten und in einer Ebene angeordneten Kontaktflächen 7.1 bis 7.3 mit der Struktur 9 verschraubt, wird das Faserbauteil 1 dadurch nicht verformt und nicht verspannt. Diese Situation ist in der Figur 3 dargestellt. Wegen der erfindungsgemäßen Überarbeitung der Kontaktflächen 7.1 bis 7.3 liegen alle Kontaktflächen flächig auf der Oberseite 10 der Struktur 9 auf.

Durch das erfindungsgemäße Fertigungsverfahren ist es also möglich, die fertigungsbedingten Abweichungen von Lage und/oder Ausrichtung der Kontaktflächen 7.1 bis 7.3 zu egalisieren, indem an den Kontaktflächen 7 Material abgetragen wird, bis alle Kontaktflächen 7 die gewünschte Lage und Ausrichtung haben. D. h. die Ist-Position entspricht bis auf Bruchteile eines Millimeters der Soll-Position.

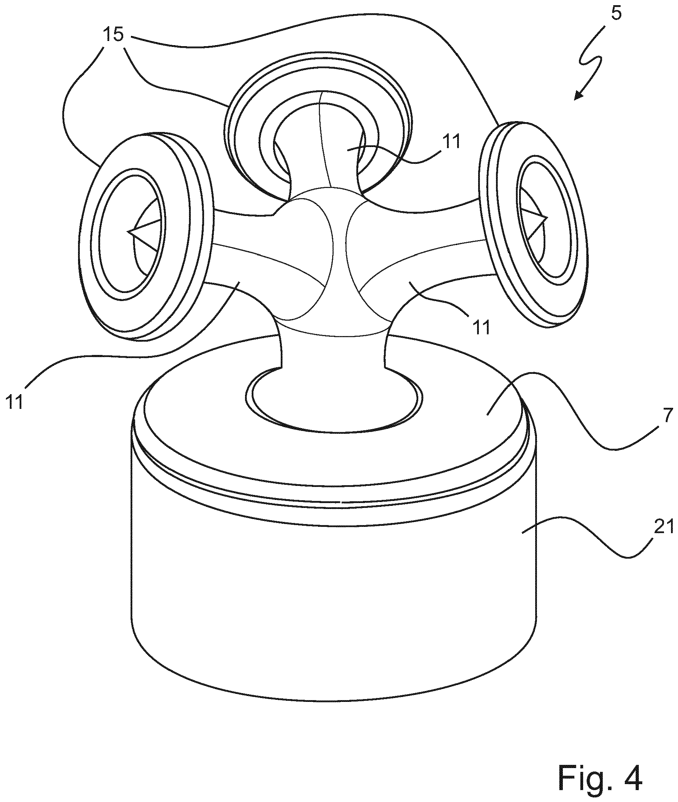

In den Figuren 4 und 5 ist ein Ausführungsbeispiel eines erfindungsgemäßen Wickelstifts 5 dargestellt. Die Figur 4 zeigt eine Isometrie des Wickelstifts 5. Die Figur 5 zeigt einen Schnitt durch den Wickelstift 5.

In der Figur 4 ist ein Ausführungsbeispiel eines erfindungsgemäßen Wickelstifts 5 mit drei Wickelzapfen 11 dargestellt. Die Zahl der Wickelzapfen 11 und deren Anordnung bzw. deren Ausrichtung zueinander hängen von der Ausrichtung der Stäbe 3 des Faserverbundbauteils 1 ab.

Beim Nasswickeln wird die Faser (nicht dargestellt in den Figuren 4 und 5) um die Wickelzapfen 11 geschlungen oder gelegt. Am distalen Ende jedes Wickelzapfens 11 ist ein Teller 15 vorgesehen. Die Teller 15 verhindern das Abrutschen der Faser vor dem Aushärten des Harzes.

An dem in den Figur 4 unteren Ende des Wickelstifts 5 ist eine Grundplatte 17 ausgebildet.

Anhand der Figur 5, welche einen Schnitt durch den Wickelstift 5 gemäß Figur 4 zeigt, ist gut zu erkennen, dass in der Grundplatte 17 eine Bohrung bzw. ein Innengewinde 19 vorgesehen ist.

In dieses Innengewinde 19 kann eine Schraube (nicht dargestellt) eingedreht werden, um den Wickelstift 5 und mit ihm das Faserverbundbauteil 1 zum Beispiel mit der Struktur 9 zu verschrauben, wie dies anhand der Figur 3 erläutert wurde. Das Innengewinde 19 kann vor oder nach der Montage des Faserverbundbauteils 1 an die Struktur 9 eingebracht werden.

Bei dem erfindungsgemäßen Wickelstift 5 ist im Bereich der Grundplatte 17 eine Ausgleichshülse 21 angeordnet. Die Ausgleichshülse 21 ist bei diesem Ausführungsbeispiel als separates Bauteil ausgeführt. Sie kann zum Beispiel aus einem gut zerspanbaren Kunststoff hergestellt werden.

Die in der Figur 5 untere Stirnseite 7 der Ausgleichshülse 21 ist deren Kontaktfläche. Die Grundplatte 17 hat an ihrer Unterseite einen Absatz 24. Über den Absatz 24 wird die Ausgleichshülse 21 relativ zu der Grundplatte 17 zentriert und positioniert.

Die Ausgleichshülse 21 kann mit einem Presssitz auf den Absatz 24 aufgeschoben werden und/oder mit diesem verklebt werden. Dadurch können die beim Überarbeiten der Ausgleichshülse 21 auftretenden Kräfte in den Wickelstift 5 eingeleitet werden, ohne dass eine Relativbewegung von Ausgleichshülse 21 und Wickelstift auftritt. Sie ist dadurch auch gegen Herunterfallen gesichert.

Die Ausgleichshülse 21 ragt nach unten über die Grundplatte 17 hinaus. Das hat zur Folge, dass der Wickelstift 5 nur mit der kreisringförmigen Kontaktfläche 7 der Ausgleichshülse 21 auf der Oberseite 10 der Struktur 9 aufliegt (siehe z.B. Figur 3). Die Grundplatte 17 des Wickelstifts 5 hat keinen direkten Kontakt zu der Struktur 9.

Um die vorhandenen Abweichungen von Lage und/oder Ausrichtung der Kontaktfläche 7 zu egalisieren, wird am unteren Ende der Ausgleichshülse 21 Material abgetragen, beispielsweise durch Fräsen, Schleifen oder Feilen, und auf diese Weise die Position und/oder die Ausrichtung der Kontaktfläche 7 zu verändern.

Eine Alternative sieht vor, zum Ausgleich von Positionsabweichungen die Ausgleichshülse 21 bei Bedarf durch eine kürzere oder eine längere Ausgleichshülse zu ersetzen. Dadurch wird die Lage der Kontaktfläche 7 ebenfalls verändert.

Wenn die Kontaktfläche 7 einer auswechselbaren Ausgleichshülse schräggestellt ist, kann durch Auswechseln der Ausgleichshülse 21 auch die Ausrichtung der Kontaktfläche 7 korrigiert werden. "Schräggestellt" bedeutet, dass der Normalenvektor der Kontaktfläche 7 nicht parallel zur Längsachse der Ausgleichshülse 21 verläuft.

Es ist ebenfalls möglich (nicht dargestellt in den Figuren 4 und 5), die Ausgleichshülse 21 als integralen Bestandteil des Wickelstifte 5 auszubilden. Dann können die Ausgleichshülse 21 und der Wickelstift 5 beispielsweise durch ein generatives Herstellungsverfahren, Gießen oder Kunststoffspritzen in einem Stück hergestellt werden.

Zum Ausgleich der herstellungsbedingten Maßabweichungen oder Lageabweichungen der Kontaktfläche 7 wird dann ebenfalls ein Teil der Ausgleichshülse 21 abgetragen.

Anhand der Figur 5 ist gut zu erkennen, dass an den Enden der Wickelzapfen 11 im Bereich des Tellers 15 jeweils eine Positionierspitze 23 ausgebildet ist. Diese Positionierspitze 23 kann man zum Positionieren und/oder Ausrichten des Wickelstifts 5 verwenden.

Man kann sie aber auch bei der Handhabung des Wickelstifts 5 (beim Einsetzen in eine Wickelvorrichtung) verwenden. Beispielsweise, indem ein entsprechend ausgebildeter Greifer den Wickelstift 5 an den Positionierspitzen 23 der drei Wickelzapfen 11 aufnimmt und in einer Wickelvorrichtung in der gewünschten Ausrichtung einsetzt. Mit zunehmender Anzahl der Positionierspitzen 23 lässt sich beides einfacher bzw. genauer durchführen.

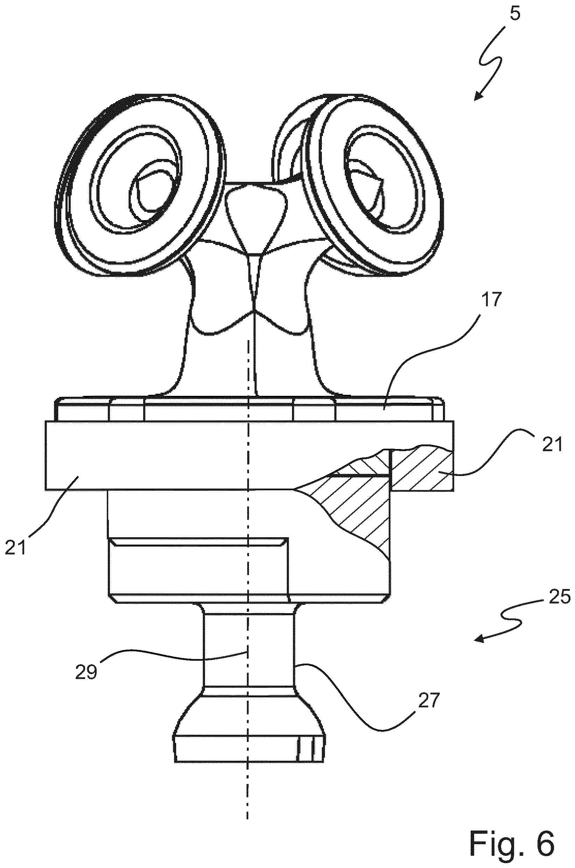

In der Figur 6 ist ein Wickelstift 5 vor dem Einsetzen in eine Wickelvorrichtung im Teilschnitt dargestellt.

Damit der Wickelstift 5 in eine Wickelvorrichtung eingesetzt und in ihr gehalten werden kann, ist am "unteren" Ende des Wickelstifts 5 temporär ein taillierter Spannstift 25 eingesetzt. Solche Spannstifte sind im Werkzeug- und Vorrichtungsbau, aber auch im Möbelbau seit vielen Jahren im Einsatz und daher dem Fachmann bekannt, so dass von einer ausführlichen Beschreibung abgesehen wird.

Im Zusammenhang mit der Erfindung sei angemerkt, dass in einer nicht dargestellten Wickelvorrichtung Spannmittel vorhanden sind, die in eine Taille 27 des Spannstifts 25 eingreifen und diesen in der Figur 6 nach unten ziehen. Dadurch wird der Spannstift 25 und der an ihm befestigte Wickelstift 5 während des Wickelvorgangs und bis zum Aushärten des Harzes in der Wickelvorrichtung gehalten und fixiert.

Anschließend werden die Spannmittel gelöst und das fertige Bauteil kann aus der Wickelvorrichtung entnommen werden. Danach werden die Spannstifte 25 von den Wickelstiften 5 entfernt.

Wie sich aus der Figur 6 ergibt, wird der Spannstift 25 von der Ausgleichshülse 21 zentriert. Er wird über das Innengewinde 19 des Wickelstifts 5 mit diesem vorübergehend verschraubt und gegen die Grundplatte 17 des Wickelstifts 5 gezogen. Diese lösbare Schraubverbbindung ist durch eine strichpunktierte Linie 29 in der Figur 6 angedeutet. Vorzugsweise werden hierfür Gewindestifte benutzt.

In der Figur 7 ist eine Wickelvorrichtung 31 dargestellt in der drei Wickelstifte 5 eingesetzt sind. Gehalten werden die Wickelstifte über Spannstifte 25. Wie sich aus dem freigeschnittenen Teil der Figur 7 ergibt, wird der Spannstift 25 in einer Aufnahme 33 der Wickelvorrichtung 31 zentriert. Die Grundplatte 17 des Wickelstifts 25 wird von nur schematisch dargestellten Spannmitteln 35 gegen die Wickelvorrichtung 31 gezogen.

Bei einer idealen Wickelvorrichtung 31 ist die Oberseite 37 eben oder plan, entsprechend der Oberseite 10 der Struktur 9 mit der das noch nicht hergestellte Faserbauteil später verschraubt werden soll. Dann wären die Kontaktflächen 7 der Wickelstifte genau an dem gewünschten Ort und auch korrekt ausgerichtet.

Die Realität ist jedoch eine andere: Es treten an verschiedenen Stellen Ungenauigkeiten auf, die sich teilweise addieren. In der Figur 7 sind diese Ungenauigkeiten der Wickelvorrichtung 31 stark übertrieben als Lage- und Ausrichtungsfehler dargestellt. Im Ergebnis führen diese Lage- und Ausrichtungsfehler der Wickelvorrichtung 31 zu dem in der Figur 1 dargestellten Faserbauteil 1, dessen Kontaktflächen 7.1 bis 7.3 die eingangs beschriebenen Lage- und Ausrichtungsfehler aufweisen. Zur besseren Nachvollziehbarkeit der Zeichnungen resultieren alle dargestellten Lage- und Ausrichtungsfehler alleinig aus der Oberfläche 37 der Wickelvorrichtung 31 wohingegen die Struktur 9 eine vollständig fehlerfreie ebene Oberseite 10 aufweist. In der Realität weisen jedoch beide Oberflächen 37 und 10 Abweichungen von einer perfekt ebenen Oberfläche auf.

Durch die erfindungsgemäßen Wickelstifte 5 und das erfindungsgemäße Verfahren können alle Lage- und/oder Ausrichtungsfehler wie oben ausführlich beschrieben egalisiert werden.

### Bezugszeichenliste

- 1: Faserverbundbauteil
- 3: Stab
- 5: Wickelstift
- 7: Kontaktfläche
- 9: Struktur
- 10: Oberseite der Struktur
- 11: Wickelzapfen

- 15: Teller
- 17: Grundplatte
- 19: Innengewinde
- 21: Ausgleichshülse
- 23: Positionierspitze
- 24: Absatz
- 25: Spannstift
- 27: Taille
- 29: strichpunktierte Linie
- 31: Wickelvorrichtung
- 33: Aufnahme

## Patentansprüche

1. Verfahren zur Herstellung von Faserverbundbauteilen, umfassend die folgenden Verfahrensschritte:
- Positionieren von mehreren Wickelstiften (5, 5.1 bis 5.4), wobei mindestens einer der Wickelstifte (5, 5.1 bis 5.4) eine Kontaktfläche (7, 7.1 bis 7.3) aufweist,
- Ablegen von mindestens einer Faser um die Wickelstifte (5, 5.1 bis 5.4), so dass sie zwei oder mehr Wickelstifte (5, 5.1 bis 5.4) miteinander verbinden,
- Aushärten des Harzes und **gekennzeichnet durch**
- Überarbeiten der mindestens einen Kontaktfläche (7, 7.1 bis 7.3) zum Ausgleich von Positions- und/oder Ausrichtungsabweichungen nach erfolgter Aushärtung.

2. Verfahren nach Anspruch 1, **dadurch gekennzeichnet, dass** das Überarbeiten der mindestens einen Kontaktfläche (7.1, 7.2, 7.3) durch Auftragen, Abtragen und/oder eine spanende Bearbeitung erfolgt.

3. Verfahren nach Anspruch 1, **dadurch gekennzeichnet, dass** das Überarbeiten der mindestens einen Kontaktfläche (7.1 bis 7.3) durch Auswechseln einer Ausgleichshülse (21) durch eine gegenüber der ursprünglichen Ausgleichshülse (21) längere oder kürzere Ausgleichshülse erfolgt.

4. Verfahren nach Anspruch 1 oder 3, **dadurch gekennzeichnet, dass** das Überarbeiten der mindestens einen Kontaktfläche (7.1 bis 7.3) durch Auswechseln einer Ausgleichshülse (21) durch eine Ausgleichshülse (21) erfolgt, bei der die Kontaktfläche (7) nicht parallel zu einer Grundfläche der Ausgleichshülse (7) ist.

5. Verfahren nach einem der vorhergehenden Ansprüche, **dadurch gekennzeichnet, dass** die Wickelstifte (5) vor dem Wickeln in einer Wickelvorrichtung positioniert und, falls erforderlich, ausgerichtet werden.

6. Verfahren nach einem der vorhergehenden Ansprüche, **dadurch gekennzeichnet, dass** das Ablegen von mindestens einer Faser um die Wickelstifte (5, 5.1 bis 5.4) das Wickeln, das Flechten und/oder das Knäulen umfasst.

7. Verfahren nach einem der vorhergehenden Ansprüche, **dadurch gekennzeichnet, dass** die Faser(n) vor und/oder nach dem Ablegen mit einem (flüssigen) Harz getränkt werden.

8. Wickelstift für ein Faserverbundbauteil, umfassend eine Grundplatte (17) **dadurch gekennzeichnet, dass** der Wickelstift mehrere Wickelzapfen (11) und eine an der Grundplatte (17) angeordnete Ausgleichshülse (21) umfasst, wobei an der Grundplatte (17) eine Bohrung und/oder ein Innengewinde (19) ausgebildet ist, und wobei die Ausgleichshülse (21) eine Kontaktfläche (7) aufweist.

9. Wickelstift nach Anspruch 8, **dadurch gekennzeichnet, dass** die Zahl und die Ausrichtungen der Wickelzapfen (11) an den vorgesehenen Einbauort in einem Faserverbundbauteil (1) angepasst sind.

10. Wickelstift nach Anspruch 8 oder 9, **dadurch gekennzeichnet, dass** an den Enden des oder der Wickelzapfen (11) ein Teller (15) ausgebildet ist.

11. Wickelstift nach einem der Ansprüche 8 bis 10, **dadurch gekennzeichnet, dass** an einem oder mehreren Tellern (15) eine Positionierspitze (23) ausgebildet ist.

12. Wickelstift nach einem der Ansprüche 8 bis 11, **dadurch gekennzeichnet, dass** die Ausgleichshülse (21) als separates Bauteil ausgebildet ist.

13. Wickelstift nach Anspruch 11, **dadurch gekennzeichnet, dass** an der Grundplatte (17) Mittel zur Aufnahme der Ausgleichshülse (21) ausgebildet sind.

14. Wickelstift nach Anspruch 13, **dadurch gekennzeichnet, dass** die Mittel zur Aufnahme der Ausgleichshülse (21) als Absatz (24) ausgebildet sind.

15. Wickelstift nach einem der Ansprüche 8 bis 11, **dadurch gekennzeichnet, dass** die Ausgleichshülse (21) integraler Bestandteil der Grundplatte (17) ist.

16. Wickelstift nach einem der Ansprüche 8 bis 15, **dadurch gekennzeichnet, dass** die Grundplatte (17) als Zweiflach oder als regelmäßiges oder unregelmäßiges Polygon ausgebildet ist.

17. Wickelstift nach einem der Ansprüche 8 bis 16, **dadurch gekennzeichnet, dass** der Wickelstift (5) und /oder die Ausgleichshülse (21) aus Metall oder Kunststoff besteht.

## Claims

1. Method for producing fiber composite components, comprising the following method steps:
- positioning a plurality of winding pins (5, 5.1 to 5.4), at least one of the winding pins (5, 5.1 to 5.4) having a contact surface (7, 7.1 to 7.3),
- laying at least one fiber around the winding pins (5, 5.1 to 5.4) so that they connect two or more winding pins (5, 5.1 to 5.4) together,
- curing the resin and **characterized by**
- reworking the at least one contact surface (7, 7.1 to 7.3) to compensate for position and/or alignment deviations after curing.

2. Method according to claim 1, **characterized in that** the at least one contact surface (7.1, 7.2, 7.3) is reworked by application, removal and/or machining.

3. Method according to claim 1, **characterized in that** the at least one contact surface (7.1 to 7.3) is reworked by replacing a compensating sleeve (21) with a compensating sleeve that is longer or shorter than the original compensating sleeve (21).

4. Method according to claim 1 or 3, **characterized in that** the at least one contact surface (7.1 to 7.3) is reworked by replacing a compensating sleeve (21) with a compensating sleeve (21), in which the contact surface (7) is not parallel to a base surface of the compensating sleeve (7).

5. Method according to any of the preceding claims, **characterized in that** the winding pins (5) are positioned in a winding device before winding and, if necessary, are aligned.

6. Method according to any of the preceding claims, **characterized in that** the laying of at least one fiber around the winding pins (5, 5.1 to 5.4) comprises winding, braiding and/or knotting.

7. Method according to any of the preceding claims, **characterized in that** the fiber(s) are impregnated with a (liquid) resin before and/or after the laying process.

8. Winding pin for a fiber composite component, comprising a base plate (17) **characterized in that** the winding pin comprises a plurality of winding pins (11) and a compensating sleeve (21) arranged on the base plate (17), a bore and/or an internal thread (19) being formed on the base plate (17), and the compensating sleeve (21) having a contact surface (7).

9. Winding pin according to claim 8, **characterized in that** the number and alignments of the winding pins (11) are adapted to the intended installation location in a fiber composite component (1).

10. Winding pin according to claim 8 or 9, **characterized in that** a plate (15) is formed at the ends of the winding pin(s) (11).

11. Winding pin according to any of claims 8 to 10, **characterized in that** a positioning tip (23) is formed on one or more plates (15).

12. Winding pin according to any of claims 8 to 11, **characterized in that** the compensating sleeve (21) is designed as a separate component.

13. Winding pin according to claim 11, **characterized in that** means for receiving the compensating sleeve (21) are formed on the base plate (17).

14. Winding pin according to claim 13, **characterized in that** the means for receiving the compensating sleeve (21) are designed as a shoulder (24).

15. Winding pin according to any of claims 8 to 11, **characterized in that** the compensating sleeve (21) is an integral component of the base plate (17).

16. Winding pin according to any of claims 8 to 15, **characterized in that** the base plate (17) is designed as a dihedron or as a regular or irregular polygon.

17. Winding pin according to any of claims 8 to 16, **characterized in that** the winding pin (5) and/or the compensating sleeve (21) is made of metal or plastics material.

## Revendications

1. Procédé de fabrication d'éléments composites renforcés par des fibres, comprenant les étapes de procédé suivantes :
- le positionnement de plusieurs broches d'enroulement (5, 5.1 à 5.4), dans lequel au moins l'une des broches d'enroulement (5, 5.1 à 5.4) présente une surface de contact (7, 7.1 à 7.3),
- le dépôt d'au moins une fibre autour des broches d'enroulement (5, 5.1 à 5.4) de sorte qu'elles relient deux broches d'enroulement (5, 5.1 à 5.4) ou plus entre elles,
- le durcissement de la résine et **caractérisé par**
- la révision
de la au moins une surface de contact (7, 7.1 à 7.3) pour compenser les écarts de position et/ou d'orientation après que le durcissement a eu lieu.

2. Procédé selon la revendication 1, **caractérisé en ce que** la révision de la au moins une surface de contact (7.1, 7.2, 7.3) s'effectue par application, enlèvement de matière et/ou un usinage par enlèvement de copeaux.

3. Procédé selon la revendication 1, **caractérisé en ce que** la révision de l'au moins une surface de contact (7.1 à 7.3) s'effectue par remplacement d'une douille de compensation (21) par une douille de compensation plus longue ou plus courte par rapport à la douille de compensation (21) initiale.

4. Procédé selon la revendication 1 ou 3, **caractérisé en ce que** la révision de l'au moins une surface de contact (7.1 à 7.3) s'effectue par remplacement d'une douille de compensation (21) par une douille de compensation (21) pour laquelle la surface de contact (7) n'est pas parallèle à une surface de base de la douille de compensation (7).

5. Procédé selon l'une quelconque des revendications précédentes, **caractérisé en ce que** les broches d'enroulement (5) sont positionnées et, si nécessaire, alignées dans un dispositif d'enroulement avant l'enroulement.

6. Procédé selon l'une quelconque des revendications précédentes, **caractérisé en ce que** le dépôt d'au moins une fibre autour des broches d'enroulement (5, 5.1 à 5.4) comprend l'enroulement, le tressage et/ou le nouage.

7. Procédé selon l'une quelconque des revendications précédentes, **caractérisé en ce que** la ou les fibres sont imprégnées d'une résine (liquide) avant et/ou après le dépôt.

8. Broche d'enroulement pour un élément composite renforcé par des fibres, comprenant une plaque de base (17), **caractérisée en ce que** la broche d'enroulement comprend plusieurs tourillons d'enroulement (11) et une douille de compensation (21) disposée sur la plaque de base (17), dans laquelle un alésage et/ou un filetage intérieur (19) est réalisé sur la plaque de base (17), et dans laquelle la douille de compensation (21) présente une surface de contact (7).

9. Broche d'enroulement selon la revendication 8, **caractérisée en ce que** le nombre et les orientations des broches d'enroulement (11) sont adaptés à l'emplacement de montage prévu dans un élément composite renforcé par des fibres (1).

10. Broche d'enroulement selon la revendication 8 ou 9, **caractérisée en ce qu'**un plateau (15) est réalisé aux extrémités du ou des tourillons d'enroulement (11).

11. Broche d'enroulement selon l'une quelconque des revendications 8 à 10, **caractérisée en ce qu'**une pointe de positionnement (23) est réalisée sur un ou plusieurs plateaux (15) .

12. Broche d'enroulement selon l'une quelconque des revendications 8 à 11, **caractérisée en ce que** la douille de compensation (21) est réalisée sous la forme d'un élément séparé.

13. Broche d'enroulement selon la revendication 11, **caractérisée en ce que** des moyens pour recevoir la douille de compensation (21) sont réalisés sur la plaque de base (17).

14. Broche d'enroulement selon la revendication 13, **caractérisée en ce que** les moyens de réception de la douille de compensation (21) sont réalisés sous forme de talon (24).

15. Broche d'enroulement selon l'une quelconque des revendications 8 à 11, **caractérisée en ce que** la douille de compensation (21) fait partie intégrante de la plaque de base (17) .

16. Broche d'enroulement selon l'une quelconque des revendications 8 à 15, **caractérisée en ce que** la plaque de base (17) est réalisée sous la forme d'un dièdre ou d'un polygone régulier ou irrégulier.

17. Broche d'enroulement selon l'une quelconque des revendications 8 à 16, **caractérisée en ce que** la broche d'enroulement (5) et/ou la douille de compensation (21) sont en métal ou en plastique.
